(19) Europäisches Patentamt
European Patent Office
Office européen des brevets

(11) Publication number: **0 677 246 A1**

(12) **EUROPEAN PATENT APPLICATION**

(21) Application number: **95105438.6**

(22) Date of filing: **11.04.95**

(51) Int. Cl.6: **A01N 43/653**, //(A01N43/653, 47:38,47:34,47:18,43:78,43:56, 43:52)

(30) Priority: **12.04.94 JP 99321/94**

(43) Date of publication of application: **18.10.95 Bulletin 95/42**

(84) Designated Contracting States: **DE ES FR GB**

(71) Applicant: **KUREHA KAGAKU KOGYO KABUSHIKI KAISHA**
**1-9-11, Nihonbashi, Horidome-cho**
**Chuo-ku**
**Tokyo 103 (JP)**

(72) Inventor: **Tateishi, Hideaki**
**30-9, Meijidanchi**
**Iwaki-shi,**
**Fukushima-ken (JP)**
Inventor: **Chida, Tsuneaki**
**10-9, Ichoda,**
**Jobanshiratori-machi**
**Iwaki-shi,**
**Fukushima-ken (JP)**

(74) Representative: **Kraus, Walter, Dr. et al**
**Patentanwälte Kraus, Weisert & Partner**
**Thomas-Wimmer-Ring 15**
**D-80539 München (DE)**

(54) **Fungicidal composition.**

(57) The present invention provides a fungicidal composition having a stable crop damage prevention at a small dosage. It contains at least one fungicidal compound selected from the group consisting of benomyl, cypendazole, carbendazim (also called as "MBC"), EBC, thiabendazole, fuberidazole, dimetbenzazol, thiophanate methyl and thiophanate ethyl with ipconazole.

EP 0 677 246 A1

## FIELD OF THE INVENTION

This invention relates to a fungicidal composition used as a foliar applied agent for rice, wheat, barley, rye, oat, fruits, and vegetables, and seed disinfectant. More particularly, it relates to a fungicidal composition preferably used as a seed treatment fungicide.

## RELATED ARTS

With the popularization of the mechanical transplanting of rice nursery, healthy seedlings of rice on nursery transplanting flat has became important. Serious crop damage can occur during the growth in a transplanting flat by filamentous fungus such as Gibberella fujikuroi, Pyricularia oryzae, Cochliobolus miyabeanus, etc. Recently, the deterioration in the effect of prevention of such diseases due to generation of microorganisms having resistance to benzimidazole fungicides has became serious problem.

Seed treatment is very effective for crop protection during the course of growth of rice seedlings, and conventionally benomyl, thiophanate methyl, thiuram, copper, triflumizole, pefurazoate formulation, or a mixture thereof has been used for prevention from the seed born diseases.

However, the conventionally used seed disinfectant has left some problems to be solved. For instance, in the case of the benzimidazole type fungicide, which has been conventionally used widely, there appears a microorganism having the resistance to this agent in the part of the disease microorganisms, and lowering of the preventive effect on the seed born diseases has been reported. As the agent also effective for the microorganisms having the resistance to benzimidazole type fungicides, ergosterol biosynthesis inhibitors (hereinafter referred to as " EBI(s)") such as triflumizole, pefurazoate, or prochloraz have recently come into being. However, the generation of disease microorganisms having a low sensitivity to some of the EBIs have been pointed out, and thus, it has been demanded to monitor the increasing resistance cautiously and to establish means for taking precautions against the development of resistance.

It has been demanded, therefore, to develop a seed disinfectant which has a stable preventive effect against the microorganisms having resistance to benzimidazole type fungicide and can prevent the development of any microorganism having resistance to EBI, and is effective at a low dosage from the viewpoint of the environmental concerns. The present invention has been made in light of such circumstances.

## SUMMARY OF THE INVENTION

The object of the present invention is, therefore, to provide a fungicidal composition, particularly a seed disinfectant, which exhibits a steady preventive effect against the above-mentioned benzimidazole resistant microorganisms, can take precautions against the development of EBI resistant microorganism, and at the same time, is effective at a low dosage.

As a result of our serious repeated studies, we have discovered that the use of a combination of at least one fungicidal compound selected from the group consisting of benomyl, cypendazole, carbendazim (also referred to as " MBC"), EBC, thiabendazole, fuberidazole, dimetbenzazol, thiophanate methyl, and thiophanate ethyl with ipconazole as an effective compound can solve the above-enumerated object, thereby achieving the present invention.

## DETAILED DESCRIPTION OF PREFERRED EMBODIMENTS

The present invention has the following constructional characteristics:

The fungicidal composition according to the present invention comprises: at least one fungicidal compound (hereinafter referred to as "compound belonging to group B") selected from the group consisting of benomyl represented by formula I wherein $R^1$ is (butylamino)carbonyl and $R^2$ is methoxycarbonylamino, cypendazole represented by formula I wherein $R^1$ is ((5-cyanopentyl)amino)carbonyl and $R^2$ is methoxycarbonylamino, carbendazim (MBC) represented by formula I wherein $R^1$ is hydrogen and $R^2$ is methoxycarbonylmino, EBC represented by formula I wherein $R^1$ is hydrogen and $R^2$ is ethoxycarbonylamino, thiabendazole represented by formula I wherein $R^1$ is hydrogen and $R^2$ is 4-thiazolyl, fuberidazole represented by formula I wherein $R^1$ is hydrogen and $R^2$ is 2-furanyl, dimetbenzazol represented by formula I wherein $R^1$ is hydrogen and $R^2$ is 3,5-dimethyl-1H-pyrazol-1-yl, thiophanate methyl represented by formula II wherein $R^3$ is methyl, and thiophanate ethyl represented by formula II wherein $R^3$ is ethyl with ipconazole represented by formula III.

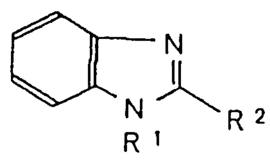

( I )

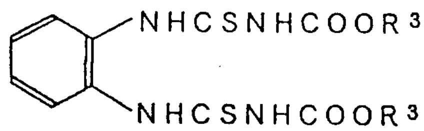

(II)

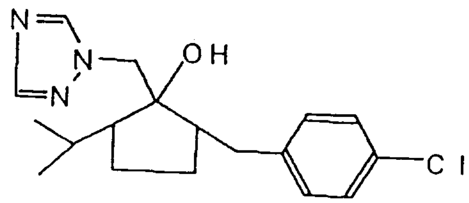

(III )

Ipconazole which is one effective ingredient of the present fungicidal composition is a fungicidal compound, and is disclosed in EP 267778 as exhibiting an excellent effect for prevention against Erysiphe graminis, and Puccinia sp. of various crops, Gymnosporangium asiaticum and Venturia nashicola of fruits, Gibberella fujikuroi, Pyricularia oryzae, Cochliobolus miyabeanus of rice, etc. This compound is classified as an EBI, because it inhibits biosynthesis of ergosterol (an element of a cell membrane).

The fungicidal compound belonging to group B, which is the other component of the present fungicidal composition, has a similar effect in inhibiting mitosis of plant disease microorganisms and has been known to be effective in prevention of a wide range of disease due to filamentous fungi, and is classified as a benzimidazole type fungicide.

All of these fungicidal compounds belonging to group B have been widely used as effective components for agricultural fungicides.

However, as described above, there appears to be resistant microorganisms in important plant disease microorganisms, and examples of difficulties in the crop damage prevention have been reported.

For example, benomyl has hitherto been widely used as a seed disinfectant, but the generation of the resistant Gibberella fujikuroi of rice plant has posed to be problematic.

Determining the sensitivity of plant disease microorganisms isolated from the field of nature (Gibberella fujikuroi of rice isolated from the infected rice stem) to ipconazole and to benomyl, it has been found that the microorganisms having resistance to benomyl has a very high sensitivity to ipconazole and the strain having a somewhat low sensitivity to ipconazole has a high sensitivity to benomyl.

To be specific, about ipconazole, although there exists a low sensitivity group at a MIC value of approximately 6.25 $\mu$g/ml, the most of the strains have a high sensitivity with an MIC value of not more than 0.39 $\mu$ g/ml, confirming no existence of resistant microorganisms.

On the other hand, for benomyl there exist two groups having different MIC peak values, i.e., of approximately 3.13 $\mu$g/ml and 1600 $\mu$/ml.

The Gibberella fujikuroi having resistance to benomyl (MIC value > 400 $\mu$g/ml) belongs to the group having a very high sensitivity to ipconazole.

On the other hand, the strain having a somewhat low sensitivity to ipconazole is a microorganism sensitive to benomyl (MIC value: 3.13 $\mu$g/ml).

To be specific, when the fungicidal compound belonging to group B is used together with ipconazole, the microorganisms having resistance to the compound belonging to group B can be prevented at a small dosage of ipconazole, and the microorganisms having a low sensitivity to the EBI fungicide can be prevented by the fungicidal compound belonging to group B. Therefore, even in the case where a microorganism having resistance to the fungicidal compound belonging to group B and a microorganism having low sensitivity to ipconazole coexist, the dosages of both agents can be lowered in comparison with the case where each agent is used independently.

Accordingly, a stable effect against the resistant microorganisms can be obtained and, at the same time, the development of microorganisms belonging to EBI agent can be prevented beforehand.

It has not yet been known that the joint use of the fungicidal compound belonging to group B and ipconazole gives both a stable crop damage prevention effect at a low dosage and the effect of taking precautions against the development of resistant microorganisms according to the present invention.

Moreover, as an effect of the joint use according to the present invention, it can be mentioned that the joint use makes it possible to exhibit crop damage prevention of wide variety of spectrum including nematode disease and disease due to filamentous fungi.

The fungicidal composition according to the present invention can be used by mixing each of the effective components immediately before use, but generally, each of the effective components are mixed with a carrier to produce a formulation to be used. Optionally, various preparation auxiliaries, e.g., surfactants, wetting agents, fixing agents, thickeners, and stabilizers, can be added to produce a formulation in the form of a wettable powder, dust, suspension concentrate, etc.

In the fungicidal composition of the present invention, the mixing ratio of ipconazole to the compound belonging to group B in weight ratio is in the range of 1:0.01 to 1:1000, preferably 1:0.1 to 1:100.

In the fungicidal composition of the present invention, when the above-enumerated effective components are mixed with a carrier, the content of the carrier in the weight ratio is usually in the range of 0.1 to 80%. Examples of the carrier for the above-enumerated preparation include fine powdery or solid granular carriers such as kaolin, attapulgite, bentonite, Japanese acid clay, pyrophylite, talc, diatomaceous earth, calcite, walnut powder, urea, ammonium sulfate, synthetic hydrated silicon oxide; liquid carriers such as aromatic hydrocarbons (e.g., xylene, and methylnaphthalene), alcohols (e.g., isopropanol, ethylene glycol, and Cellosolve), ketones (e.g., acetone, cyclohexanone, isophorone), vegetable oils (e.g., soybean oil and cottonseed oil), dimethylsulfoxide, acetonitrile, and water.

Examples of the surfactant used for emulsifying, dispersing and wetting include anionic surfactants such as salts of alkyl sulfate ester, alkylaryl sulfonate, dialkyl sulfosuccinic acid salts, condensation product between naphthalenesulfonic acid and formaldehyde, polycarboxylic acid type macromolecules; and cationic surfactants such as polyoxyethylene alkyl ethers, polyoxyethylene alkylaryl ethers, polyoxyethylene-polyoxypropylene block copolymers, and sorbitan fatty acid esters. Examples of preparation auxiliaries include lignin sulfonates, arginates, polyvinyl alcohol, gum arabic, CMC (carboxymethyl cellulose), PAP (isopropyl acidic phosphate), and xanthane gum, and the like.

In the case where a seed is treated with the fungicidal composition according to the present invention, the preparation is diluted with water to prepare a solution having a total concentration of 50 to 5000 ppm, which is applied to the plant to be treated, the seed is impregnated in this solution or composition in the powdery state is applied to the seed to be covered. In the case of covering the seed, the amount to be used depends on the form of the preparation and the type of crop seed to be treated.

Furthermore, the use of the fungicidal composition of the present invention mixed with other fungicides such as tachigaren [equal to 5-methyl-3(2H)-isoxazolone] can prevent the pathogenic crop disease in wider range. The composition can also be used together with thiuram, kasugamycin, captan, probenazole, triflumizole, prochloraz, pefurazoate, copper agents, etc.

The crop disease effectively prevented by the fungicidal composition of the present invention are very wide and include, for example, for rice plant, Pyricularia oryzae, Cochliobolus miyabeanus, Gibberella fujikuroi, Ustilaginoidea virenis, Tilletia horrida, and Aphelenchoides besseyi; for wheat, Septoria tritici, Leptosphaeria nodorum, Gibberella zeae, Tilletia caries, Ustilago tritici, Fusarium sp., Cochliobolus sativus Cephalosporium graminearum, Puccinia recondita, Puccinia striiformis, Gibberella zeae, Erysiphe graminis, Pseudocercosporella herpotrichoides; for barley, Erysiphe graminis, Puccinia hordei, Puccinia striiformis, Helminthosporium gramineum, Ustilago nuda, Pyrenophora teres, Rynchosprium secalis, Ustilago avenae, Pseudocercosporella herpotrichoides; for ryes, Uricystis agropyri; for fruits and vegetables, Botrytis cinerea, Uncinula necator, Podsphaera tridactyla, Sphaerotheca pannosa, Phyllactinia pyri, Venturia nashicola, etc.

The fungicidal composition of the present invention can be used as a foliar applied agent or a disinfectant, which can suppresses crop damage due to microorganisms having resistance to a benzimidazole fungicide. Particularly, it exhibits a high effect against seed born diseases to prevent the generation of diseases problematic in the course of seedling.

EXAMPLES

PREPARATION EXAMPLE 1 (Dust Agent)

A dust agent was obtained by mixing and pulverizing 1 part of ipconazole, 3 parts of benomyl, 40 parts of clay, and 56 parts of talc.

PREPARATION EXAMPLE 2 (Wettable Powder Agent)

A wettable powder agent containing 13% of the active ingredients was obtained by thoroughly pulverizing and mixing 3 parts of ipconazole, 10 parts of benomyl, 5 parts of lignin sulfonate, 3 parts of alkyl sulfonate, and 79 parts of diatomaceous earth.

PREPARATION EXAMPLE 3 (Suspension Concentrate)

A suspension concentrate containing 9% of the active ingredients was obtained by mixing 3 parts of ipconazole, 6 parts of benomyl, 0.5 part of polyoxyethylene phenyl ether, 0.5 part of xanthane gum, 1.5 parts of a polycarboxylic acid type macromolecular agent [Demoar EP (registered trademark)], 8 parts of ethylene glycol, and 80.5 parts of water, and wet-pulverizing the mixture until the particle size was not more than 5 microns.

TEST 1

Sensitivity Test of Gibberella fujikuroi to Ipconazole and Benomyl:

From a rice plant infected with Gibberella fujikuroi, 147 strains were isolated. Using these strains, the determination of the sensitivity to ipconazole and benomyl was carried out. The detailed method used for the determination of the sensitivity was based on the method disclosed in Irie, Inoue, et al.; Manual for Agent Sensitivity of Plant disease microorganisms (3); Gibberella fujikuroi [Plant Immune Prevention (equal to ISSN 0037-4091), Vol. 47, No.8, pp 376 - 380 (1993)].

(1) Method for Determination of Sensitivity to Benomyl:

The above strain was incubated on PDA culture (produced by Nissui) at 28 °C for 7 days. On the other hand, the wettable powder containing 50% of benomyl prepared according to Preparation Example 2 was used, and the agent liquid was added to a PDA culture at 10 volume% of the amount of culture volume so that the concentration of benomyl was 1600 - 0.30 μg/ml at a double dilution rate to prepare a culture containing benomyl for the determination.

A sample was punched out in and around the pre-cultivated mycelia by means of a cork bowler, it was placed on the previously prepared culture containing benomyl for the determination placing the face of the colony down. The cultivation was conducted at 28 °C for 5 days. Whether fungal growth took place or not was evaluated to determine an MIC value (minimum growth inhibition concentration).

(2) Method for Determination of Sensitivity to Ipconazole:

The operation was carried out as in Test (1), except that the cultivation temperature was changed to 25 °C. Parts of the test results of the sensitivity of Gibberella fujikuroi are shown in Table 1.

Table 1: Results of Test of Sensitivity to Gibberella fujikuroi

| Strain No. | MIC Value μ g/ml | | Type of Sensitivity [1)] |
|---|---|---|---|
| | Ipconazole | Benomyl | |
| 1 | 6.25 | 3.13 | MS:S |
| 3 | 6.25 | 3.13 | MS:S |
| 6 | 6.25 | 3.13 | MS:S |
| 10 | 6.25 | 3.13 | MS:S |
| 17 | 6.25 | 3.13 | MS:S |
| 2 | ≦0.39 | 1600 | S:R |
| 4 | ≦0.39 | 1600 | S:R |
| 5 | ≦0.39 | 1600 | S:R |
| 7 | 0.78 | 1600 | S:R |
| 8 | 0.78 | 1600 | S:R |
| 9 | 0.78 | 1600 | S:R |
| 11 | ≦0.39 | 1600 | S:R |
| 12 | ≦0.39 | 800 | S:R |
| 13 | ≦0.39 | 1600 | S:R |
| 14 | ≦0.39 | 1600 | S:R |
| 15 | ≦0.39 | 1600 | S:R |
| 16 | ≦0.39 | 1600 | S:R |
| 18 | ≦0.39 | 1600 | S:R |
| 19 | ≦0.39 | 1600 | S:R |
| 20 | ≦0.39 | 1600 | S:R |

1) Type of Sensitivity

MS:S) The strain has a somewhat medium sensitivity to ipconazole, but has a high sensitivity to benomyl.

S:R) The strain has resistance to benomyl, but has a remarkably high sensitivity to ipconazole.

Test 2:

The rice seeds inoculate with Gibberella fujikuroi having resistance to benomyl were impregnated with the suspension prepared according to Preparation 3, after which they were cultivated in two pots packed with granulated soil in an amount of 4.5 g seeds per pot. After being maintained in an incubator at 30 °C for 3 days, the rice plants were grown at room temperature for 14 days, and the severity of disease was determined.

In each test plot, the rate of diseases was equal to

$$\{(\text{abnormally elongated seedlings' number}) \div (\text{total seedlings})\} \times 100$$

The degree of diseases incorporated was calculated according to the formula (1).

The degree of disease incorporated being 0 means that no disease was incorporated and 100 means the same situation as the case where the severity was untreated control.

$$\text{Degree of Diseases} = A/B \times 100 \qquad (1)$$

wherein A is the rate of diseases incorporated in treated test plot and B is that in untreated test plot.

Table 2

| Results of Preventing Crop Disease due to Gibberella fujikuroi | | | | | |
|---|---|---|---|---|---|
| Agent to be tested | Concentration (ppm) | Number of Seedling | Rate of Disease (%) | Degree of Disease | Total Concentration of Agents used (ppm) |
| Untreated | - | 345 | 88.8 | 100 | - |
| Ipconazole | 50 | 355 | 4.0 | 4.5 | 50 |
| Benomyl | 1000 | 357 | 67.8 | 76.4 | 1000 |
| Thiophosphate Methyl | 2500 | 353 | 66.6 | 79.2 | 2500 |
| Ipconazole + Benomyl | 50 + 500 | 360 | 0.0 | 0.0 | 550 |
| Ipconazole + Thiophosphate Methyl | 50 + 1250 | 359 | 0.0 | 0.0 | 1300 |
| Control Thiuram + Benomyl | 1000 + 1000 | 349 | 2.9 | 3.3 | 2000 |

**Claims**

**1.** A fungicidal composition comprises: at least one fungicidal compound selected from the group consisting of benomyl represented by formula I wherein $R^1$ is (butylamino)carbonyl and $R^2$ is methoxycarbonylamino, cypendazole represented by formula I where in $R^1$ is ((5-cyanopentyl)amino)-carbonyl and $R^2$ is methoxycarbonylamino, carbendazim (MBC) represented by formula I wherein $R^1$ is hydrogen and $R^2$ is methoxycarbonylamino, EBC represented by formula I wherein $R^1$ is hydrogen and $R^2$ is ethoxycarbonylamino, thiabendazole represented by formula I wherein $R^1$ is hydrogen and $R^2$ is 4-thiazolyl, fuberidazole represented by formula I wherein $R^1$ is hydrogen and $R^2$ is 2-furanyl, dimetbenzazol represented by formula I wherein $R^1$ is hydrogen and $R^2$ is 3,5-dimethyl-1H-pyrazol-1-yl, thiophanate methyl represented by formula II wherein $R^3$ is methyl, and thiophanate ethyl represented by formula II wherein $R^3$ is ethyl with ipconazole represented by formula III.

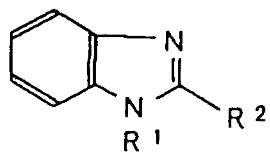

( I )

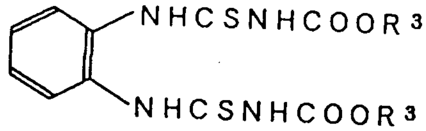

( II )

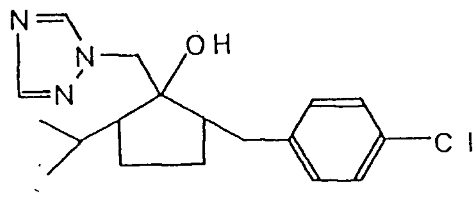

( III )

2. The fungicidal composition as claimed in Claim 1 , which contains benomyl and ipconazole.

3. The fungicidal composition as claimed in Claim 1 , which contains thiophanate methyl and ipconazole.

European Patent Office

# EUROPEAN SEARCH REPORT

Application Number
EP 95 10 5438

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | CHEMICAL PATENTS INDEX, DOCUMENTATION ABSTRACTS JOURNAL<br>Week 9329,<br>Derwent Publications Ltd., London, GB;<br>AN 93-232221<br>& JP-A-5 155 718 (KUREHA CHEM IND CO) 22 June 1993<br>* abstract *<br>--- | 1-3 | A01N43/653<br>//(A01N43/653, 47:38,47:34, 47:18,43:78, 43:56,43:52) |
| A | CHEMICAL PATENTS INDEX, BASIC ABSTRACTS JOURNAL<br>Week 8617,<br>Derwent Publications Ltd., London, GB;<br>AN 86-110310<br>& JP-A-61 053 202 (SUMITOMO) 17 March 1986<br>* abstract *<br>----- | 1-3 | |
| | | | TECHNICAL FIELDS SEARCHED (Int.Cl.6) |
| | | | A01N |

The present search report has been drawn up for all claims

| Place of search | Date of completion of the search | Examiner |
|---|---|---|
| THE HAGUE | 25 July 1995 | Decorte, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)